# EUROPEAN PATENT SPECIFICATION

(11) **EP 4 528 590 B1**
(45) Date of publication and mention of the grant of the patent: **21.10.2026**
(21) Application number: 23198287.7
(22) Date of filing: 19.09.2023
(51) Int. Cl.: G06N 3/0455, G06N 3/0499, B60W 60/00

(54) **METHOD AND SYSTEM FOR PREDICTING THE TRAJECTORY OF AN AGENT IN MOTION IN A REAL SCENE**
VERFAHREN UND SYSTEM ZUR VORHERSAGE DER FLUGBAHN EINES SICH IN EINER REALEN SZENE BEWEGENDEN AGENTEN
PROCÉDÉ ET SYSTÈME DE PRÉDICTION DE LA TRAJECTOIRE D'UN AGENT EN MOUVEMENT DANS UNE SCÈNE RÉELLE

(43) Date of publication of application: 26.03.2025
(73) Proprietor: TOYOTA JIDOSHA KABUSHIKI KAISHA, Toyota-shi, Aichi-ken, 471 8571 (JP); ETH Zurich, 8092 Zürich (CH)
(72) Inventor: ABBELOOS, Wim, 1140 Brussels (BE); ZHANG, Zhejun, 8092 Zürich (CH); LINIGER, Alexander, 8092 Zürich (CH); SAKARIDIS, Christos, 8092 Zürich (CH); YU, Fisher, 8092 Zürich (CH); VAN GOOL, Luc, 8092 Zürich (CH)
(74) Representative: Cabinet Beau de Loménie

(56) References cited:
- SHAOSHUAI SHI ET AL: "MTR++: Multi-Agent Motion Prediction with Symmetric Scene Modeling and Guided Intention Querying", ARXIV.ORG, CORNELL UNIVERSITY LIBRARY, 201 OLIN LIBRARY CORNELL UNIVERSITY ITHACA, NY 14853, 30 June 2023 (2023-06-30), XP091551928
- YIYAO ZHU ET AL: "BiFF: Bi-level Future Fusion with Polyline-based Coordinate for Interactive Trajectory Prediction", ARXIV.ORG, CORNELL UNIVERSITY LIBRARY, 201 OLIN LIBRARY CORNELL UNIVERSITY ITHACA, NY 14853, 19 August 2023 (2023-08-19), XP091587169

## Description

### Field of the disclosure

The present disclosure relates to the general topic of motion prediction in the field of autonomous driving.

### Description of Related Art

Movement prediction is crucial in autonomous driving, as it lies between perception and planning. Its role is to predict the future trajectories of other agents in the vicinity of the autonomous vehicle, based on various heterogeneous data such as high-definition (HD) maps, traffic lights, other vehicles, pedestrians and cyclists. This prediction is essential for the safe and comfortable navigation of the vehicle in interactive driving environments.

To achieve optimal performance in motion prediction, state-of-the-art methods use agent-centric representations and transformer-based network architectures. However, these approaches are computationally intensive, which poses scalability problems when the number of agents increases, particularly in congested urban environments.

A major challenge is the waste of computing resources, which is often overlooked as many studies focus on offline scenarios. In practice, it is desirable for the motion prediction module to be continuously called upon online, which requires efficient use of static and dynamic information to avoid costly repetition of inference. In addition, some methods generate numerous redundant trajectories, requiring adjustment during post-processing.

The invention relates to an efficient method of predicting movements for autonomous driving, particularly in real time. In particular, it aims to minimize the waste of computing resources and to favour raw predictions rather than heuristic aggregations, especially in a real environment with limited resources for the determination module.

Documents [C] and [D] disclose trajectory prediction methods.

### Summary of the disclosure

The invention is set out in the appended set of claims.

According to this disclosure, elements of static scene may be represented as static map elements (road edges, solid lanes, broken lanes ...) and elements with a variable state over time, such as traffic lights.

These elements as well as trajectories of agents (cars, vehicles, pedestrians) are represented as heterogeneous polylines.

Polylines of the three classes are represented as a global pose and a local attribute.

The global pose represents the position and heading of the object represented by the polyline expressed in a global coordinates system.

The local attributes of polylines specify what the polyline actually represent.

For example, a polyline of the first class is an ordered series of vectors each representing a segment of a lane of the real scene;
- the global pose of the polyline is position of a starting point of the first segment of said lane; and
- the local attribute of the polyline represents a 2D position/direction of each segment and a type of the lane.

For example, for a polyline of the second class representing a traffic light:
- the global pose is a position of the traffic light in the real scene; and
- the local attribute represents a state of the traffic light at a current date of observation.

For example, for a polyline of the third class representing a past trajectory of an agent:
- the global pose is the last observed agent pose in the real scene;
- the local attribute represents data among past 2D positions, directions, velocities, 1D speed, yaw rate and acceleration of said agent, and a size and a type of said agent.

Global poses of static elements of the real scene (roads, traffic lights, ...) may change very rarely and therefore do not need to be updated frequently. On the other hand, global pose of agents trajectories need to be tracked frequently.

The local attribute of a polyline is expressed in a coordinate frame local to the global pose of the polyline.

Before processing polylines by the neural networks, the global poses of the polylines may be used to derive a pairwise-relative pose.

Therefore, according to embodiments of the invention, at least one module of the neural network transformer s is configured to:
- determine, for each pair (i, j) of polylines, i and j being respectively of said source class and of one said target class, and using their global poses, a relative position rᵢⱼ of polyline i with respect to polyline j.

The pairwise-relative representation retains the viewpoint invariance of agent-centric representation and the good scalability of scene-centric representation at the same time.

In one embodiment of this disclosure, the heterogeneous polylines are considered as tokens, and a K-nearest neighbor attention with relative pose encoding mechanism is introduced. This feature advantageously allows the neural network transformers to aggregate the local contexts for each token via the local attributes and relative poses.

This embodiment comprises:
- determining, using said relative positions rᵢⱼ, for each polyline i of said source class, a set of K-nearest neighbors comprising the K polylines j of said at least one target class closest to polyline i ;
- the updating the local attributes uᵢ of the polylines of said source class being performed with attention to only said set of K-nearest neighbors.

In one embodiment, the position rᵢⱼ of polyline i relative to polyline j is computed using sinusoidal positional encoding and angular encoding.

The modules of the neural network transformer comprise:
- a first self-attention encoder configured for updating the local attributes of polylines of the first class;
- a first decoder configured for updating the local attributes of polylines of the second class with self-attention on polylines of the second class and with cross-attention limited to polylines of the first class encoded by the first encoder;
- a second decoder configured for updating the local attributes of polylines of the third class with self-attention on polylines of the third class and with cross-attention limited to polylines of the first class encoded by said first encoder and polylines of the second class updated by said first decoder.

In a first embodiment, the method may further comprise concatening each polyline i of the third class obtained at the output of the second decoder with learnable anchors to obtain context-enhanced trajectory polylines.

In this first particular embodiment, the modules of the neural network transformer may further comprise a decoder configured for updating said context-enhanced trajectory polylines with self-attention on said context-enhanced trajectory polylines and with cross-attention limited to polylines of the first class encoded by the first encoder, polylines of the second class updated by the first decoder and polylines of the third class updated by the second decoder.

The architecture of the attention based neural network transformer of this first embodiment emphasizes the heterogeneous nature of polylines in motion prediction tasks. The hierarchical transformer encoders and decoders separate the intra-class and inter-class attention.

This architecture prevents redundant computations and allows that polylines be updated asynchronously during online inference.

The present disclosure is not limited to this optimized architecture.

For example; according to a second embodiment, the modules of the attention based neural network transformer further comprises an all-to-all self-attention encoder configured for updating local attributes of polylines of the first class encoded by the first encoder, local attributes of polylines of the second class updated by the first decoder and local attributes of polylines of the third class encoded by the second decoder.

In this second embodiment, the method may comprise a step of concatening each polyline of the third class updated with said all-to-all self-attention encoder with learnable anchors to obtain context-enhanced trajectory polylines.

In this second embodiment, the modules of the neural network transformer may further comprise a decoder configured for updating said context-enhanced trajectory polylines with self-attention on said context-enhanced trajectory polylines and with cross-attention limited to polylines of the first, second and third classes updated by said all-to-all self-attention encoder.

The neural network transformer may comprise further modules. For example the neural network transformer may comprise a self-attention encoder configured for updating the local attributes of polylines of the second class and/or a self-attention encoder configured for updating the local attributes of polylines of the third class.

The determination of future trajectories is performed using at least another neural network taking as input said of said attention based neural network transformer.

Correlatively the invention concerns a computer-implemented system for predicting a future trajectory of at least one agent in motion in a real environment, as defined in claim 7 of the appended set of claims.

Consequently, the invention is also directed to a computer program as defined in claim 9 of the appended set of claims.

This program can use any programming language and take the form of source code, object code or a code intermediate between source code and object code, such as a partially compiled form, or any other desirable form.

The invention is also directed to a recording medium readable by a computer, as defined in claim 10 of the appended set of claims.

The recording medium can be any entity or device capable of storing the program. For example, the medium can include storage means such as a ROM, for example a CD ROM or a microelectronic circuit ROM, or magnetic storage means, for example a diskette or a hard disk.

The present disclosure also concerns a vehicle comprising a computer-implemented system as mentioned above.

The vehicle may use the method of the disclosure for predicting future trajectories of agents in the vicinity of the vehicle.

For example, the vehicle may adapt its own trajectory to avoid a future trajectory predicted by the method for another agent.

### Brief description of the drawings

Further features and advantages of the present disclosure will become apparent from the following description of certain embodiments thereof, given by way of illustration only, not limitation, with reference to the accompanying drawings in which:
Figure 1 represents polylines.
Figure 2 represents relative positions of polylines of Figure 1.
Figures 3 to 5 illustrate three examples of attention based neural network transformers that may be used in embodiments of the method and system of the present disclosure.
Figures 6 and 7 represent examples of transformer decoders and encoders that may be used in embodiments of the method and system of the present disclosure.
Figure 8 represent modules that may be used to determine future trajectories based on outputs of attention based neural network transformers of figures 3 to 5.
Figure 9 represents a computer implemented system for predicting a future trajectory according to one embodiment of the present disclosure.
Figure 10 represents the hardware architecture of the computer implemented system of Figure 9.
Figure 11 illustrates the main steps of a detection method.

### Description of embodiments

As mentioned previously, the invention aims in particular at predicting the movements of agents in a real scene.

The agents are vehicles or pedestrians.

The scene may be represented as static map elements (road edges, solid lanes, broken lanes ...) and traffic lights.
(i) both elements of the scene (static map elements and traffic lights); and
(ii) trajectories of the agents
are represented by polylines, where a polyline is an ordered list of consecutive vectors.

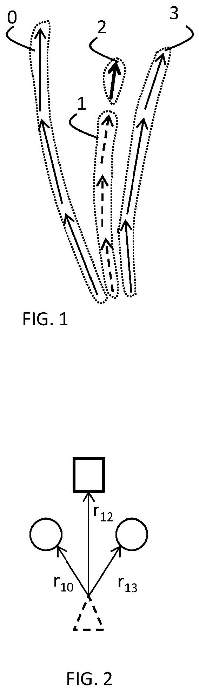

Figure 1 represents four polylines *i, i* ∈ {0, ... 3}. The two polylines "0" and "3" represent static map features MP, the polyline "2" represents a traffic light TL , and the polyline "1" represents a trajectory of an agent AG.

Each polyline *i* is represented by a global pose *pᵢ* and a local attribute *uᵢ* and denoted as (*pᵢ*, *uᵢ*).

The global pose *pᵢ* specifies the position and heading of the object (static map, traffic light, agent trajectory) represented by the polyline in the global coordinate system. It may have 3 degrees of freedom (*x, y, θ*) i.e. the 2D position and the heading yaw angle.

The local attribute *uᵢ* represents a local context of the object represented by the polyline. It is derived from intrinsic characteristics *cᵢ* of the object represented by the polyline. It is represented by polyline vectors *lᵢ* expressed, not in the global coordinate system, but in a local coordinate frame of the global pose *pᵢ*.

For example the intrinsic characteristics ${c}_{i}^{MP}$ of a static map MP polyline (i.e. a polyline representing a static map element) actually describe what this element is, for example a yellow solid lane, 8 meters long, slightly curved to the right.

For example, polygonal static map elements, such as crosswalks, may be converted to a group of parallel polylines across the polygon.

Hence, the static map elements may be represented as spatial polylines $\left({p}_{i}^{MP}, {u}_{i}^{MP}\right)$, *i ∈* {1, *... , N_{MP}*} where:
- *N_{MP}* is the number of static map elements;
- ${p}_{i}^{MP} ∈ {ℝ}^{3}$ is the global pose (2D position and heading yaw angle (*x, y, θ*)) of the starting vector in the global coordinate system;
- the local attribute ${u}_{i}^{MP}$ represents
   (*i*) ${l}_{i}^{MP} ∈ {ℝ}^{{N}_{node} \times 4}$, the 2D positions and directions of the *N_{node}* segments normalized against ${p}_{i}^{MP}$*,* and
   (ii) ${c}_{i}^{MP} ∈ {ℝ}^{{C}_{MP}}$*,* the one-hot encoding of *C_{MP}* different lane types.

In one embodiment, the local attribute ${u}_{i}^{MP} ∈ {ℝ}^{D}$, where *D* is an hidden dimension, is obtained by compressing $\left({l}_{i}^{MP}, {c}_{i}^{MP}\right)$*.* This compression may be obtained using the PointNet method described in reference [41].

For example the intrinsic characteristics ${c}_{i}^{AG}$ of an agent trajectory polyline AG (i.e. a polyline representing a trajectory of an agent) may comprise the type of the agent (vehicle, pedestrian) and its 3D size.

Hence, the agent trajectories AG may be represented as spatial-temporal polylines $\left({p}_{i}^{AG}, {l}_{i}^{AG}, {c}_{i}^{AG}\right)$*, i* ∈ {1, *..., N_{AG}*} where:
- *N_{AG}* is the number of agents' trajectories;
- ${p}_{i}^{AG} ∈ {ℝ}^{3}$ is the last observed agent pose,
- the local attribute ${u}_{i}^{AG}$ represents
   (*i*) ${l}_{i}^{AG} ∈ {ℝ}^{\left({T}_{h}\times 6\right) + 3}$, where *Tₕ* is the history length, containing the history 2D positions, directions and velocities of the agent normalized against ${p}_{i}^{AG}$ as well as the 1D speed, yaw rate and acceleration and
   (ii) ${c}_{i}^{AG} ∈ {ℝ}^{6}$, the intrinsic characteristic of the agent, for example the 3D agent size and the one-hot encoding of 3 agent types (vehicle, pedestrian and cyclist).

In one embodiment, the local attribute ${u}_{i}^{AG} ∈ {ℝ}^{D}$, where *D* is an hidden dimension, is obtained by compressing $\left({l}_{i}^{AG}, {c}_{i}^{AG}\right)$. This compression may be obtained using the PointNet method described in reference [A].

A traffic light TL may be represented by a polyline of one segment, intrinsic characteristics ${c}_{i}^{TL}$ thereof encoding the state of this element (for example colour red, yellow or green colour of the traffic light) at the time of observation (*t* = 0).

Hence, the traffic lights TL are represented as one-segment-polylines $\left({p}_{i}^{TL}, {c}_{i}^{TL}\right)$, *i* ∈ {1, *..., N_{TL}*} where:
- *N_{TL}* is the number of traffic lights;
- ${p}_{i}^{TL} ∈ {ℝ}^{3}$ is the global pose of the traffic light ; and
- ${u}_{i}^{TL} ∈ {ℝ}^{{C}_{TL}}$ is the one-hot encoding of *C_{TL}* different states of traffic lights.

In one embdodiment, a multi-layer perceptron is used to encode ${c}_{i}^{TL}$ into ${u}_{i}^{TL}$.

The method comprises a step of representing static map polylines MP, traffic lights polylines TL and agent trajectories polylines AG in a pairwise-relative polyline representation.

More precisely, in one embodiment, for each pair (*i, j*) of said polylines *MP, TL, AG,* a position *rᵢⱼ* of polyline *i* is determined relatively to a position of polyline *j*.

In one embodiment, each polyline i is viewed as a token *i* so that it can be similarly considered that for each pair (*i, j*) of tokens a position *rᵢⱼ* of token *i* is determined relatively to a position of token *j*.

Hereafter, the expressions "polyline *i*" and "token *i*" are used interchangeably.

In one embodiment, denoting *rᵢⱼ =* (*xᵢⱼ, yᵢⱼ,* θ*ᵢⱼ*) to be the global pose of token *j* represented in the coordinate of token *i*, i.e. *pⱼ* transformed to the coordinate of *pᵢ*, the relative pose encoding RPE of *rᵢⱼ* is computed using sinusoidal positional encoding (PE) and angular encoding (AE), $RPE \left({r}_{ij}\right) = concat \left(PE\left({x}_{ij}\right),PE\left({y}_{ij}\right),AE\left({θ}_{ij}\right)\right)$ ${PE}_{2 i} \left(x\right) = sin \left(x.{ω}^{\frac{2 i}{D}}\right) , {PE}_{2 i + 1} \left(x\right) = cos \left(x.{ω}^{\frac{2 i}{D}}\right)$ ${AE}_{2 i} \left(θ\right) = sin \left(θ.\left(i+1\right)\right) , {AE}_{2 i + 1} \left(θ\right) = cos \left(θ.\left(i+1\right)\right)$ wherein i ∈ {0, *... D*/2 - 1}, and *ω* is a base frequency.

For more details on PE and AE encoding, it can be referred to reference [B].

Figure 2 represents relative positions of the three polylines of Figure 1 with respect to a fourth polyline of Figure 1.

More precisely, it represents:
- the relative position *r*₁₀ of the global pose of static element 0 with respect to the global pose of agent trajectory 1;
- the relative position *r*₁₂ of the global pose of traffic light 2 with respect to the global pose of agent trajectory 1; and
- the relative position *r*₁₃ of the global pose of static element 3 with respect to the global pose of agent trajectory 1.

After encoding the local attributes via the polyline-level encoders, the scenario is now described as (pᵢ, uᵢ), i ∈ {1, ..., N} where N = N_{MP} + N_{AG} + N_{TL} is the total number of polylines.

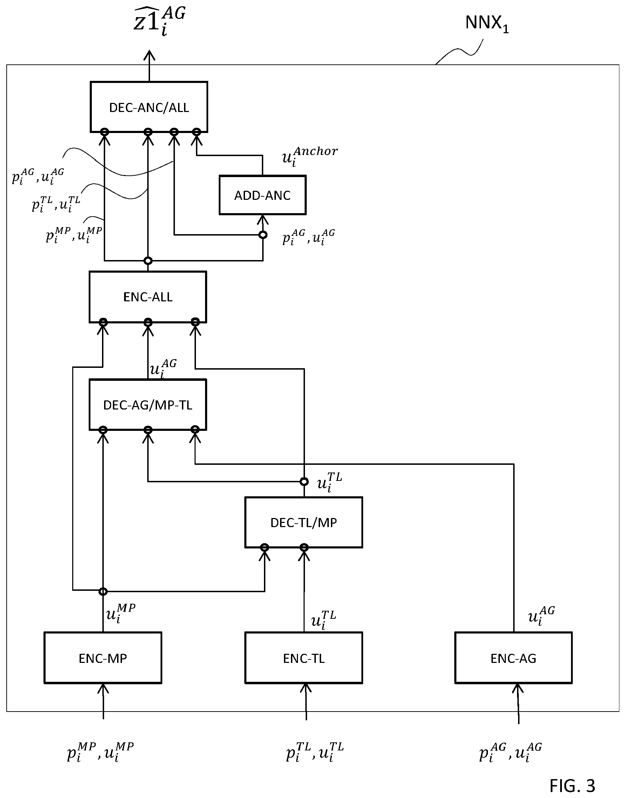

Figure 3 represents a first neural network NNX₁ that can be used in one embodiment of the invention.

This first neural network NNX₁ comprises three self-attention encoders ENC-MP, ENC-TL and ENC-AG respectively configured for updating the local attributes ${u}_{i}^{MP} , {u}_{i}^{TL}$ and ${u}_{i}^{AG}$ of first class polylines (static map) *MP,* second class polylines (traffic lights) and third class polylines (agent trajectories).

In one embodiment, the input of the first encoder ENC-MP is the sequence $\left({p}_{i}^{MP}, {u}_{i}^{MP}\right)$, *i* ∈ {1, *... , N_{MP}*} where ${u}_{i}^{MP}$ is obtained using the PointNet method applied on $\left({l}_{i}^{MP}, {c}_{i}^{MP}\right)$*.*

In one embodiment, the input of the second encoder ENC-TL is the sequence $\left({p}_{i}^{TL}, {u}_{i}^{TL}\right)$, *i* ∈ {1, *... , N_{TL}*} where ${u}_{i}^{TL}$ is obtained using the PointNet method applied on ${c}_{i}^{TL}$.

In one embodiment, the input of the third encoder ENC-AG is the sequence $\left({p}_{i}^{AG}, {u}_{i}^{AG}\right)$*, i* ∈ {1, *... , N_{AG}*} where ${u}_{i}^{AG}$ is obtained using the PointNet method applied on $\left({l}_{i}^{AG}, {c}_{i}^{AG}\right)$*.*

The output of first, second and third encoders are updated value of local context ${u}_{i}^{MP} , {u}_{i}^{TL}$ and ${u}_{i}^{AG}$ also denoted ${u}_{i}^{MP} , {u}_{i}^{TL}$ and ${u}_{i}^{AG}$ for simplicity.

This first neural network NNX₁ comprises a first decoder DEC-TL/MP configured for updating the local attributes ${u}_{i}^{TL}$ of polylines of the second class *TL* with self-attention on polylines $\left({p}_{i}^{TL}, {u}_{i}^{TL}\right)$ of the second class *TL* and with cross-attention limited to polylines $\left({p}_{i}^{MP}, {u}_{i}^{MP}\right)$ of the first class *MP* encoded by the first encoder ENC-MP.

This first neural network NNX₁ comprises a second decoder DEC-AG/MP-TL configured for updating the local attributes ${u}_{i}^{AG}$ of polylines of the third class *AG* with self-attention on polylines $\left({p}_{i}^{AG}, {u}_{i}^{AG}\right)$ of the third class *AG* and with cross-attention limited to (i) polylines $\left({p}_{i}^{MP}, {u}_{i}^{MP}\right)$ of the first class *(MP)* encoded by the first encoder ENC-MP and (ii) polylines $\left({p}_{i}^{TL}, {u}_{i}^{TL}\right)$ of the second class (*TL*) updated by the first decoder DEC-TL/MP.

This first neural network NNX₁ comprises an all-to-all self-attention encoder ENC-ALL configured for updating local attributes ${u}_{i}^{MP}$ of polylines of the first *MP* class encoded by the first encoder ENC-MP, local attributes ${u}_{i}^{TL}$ of polylines of the second class *TL* updated by the first decoder DEC-TL/MP and local attributes ${u}_{i}^{AG}$ of polylines of the third *AG* class encoded by the second decoder DEC-AG/MP-TL.

This first neural network NNX₁ comprises a module ADD-ANC configured for concatening each polyline $\left({p}_{i}^{AG}, {u}_{i}^{AG}\right)$ of the third class AG updated with the all-to-all self-attention encoder ENC-ALL with *N_{AC}* learnable anchors ${u}_{i}^{Anchor}$ to obtain context-enhanced trajectory polylines $\left({p}_{i}^{AG}, {u}_{i}^{AG}, {u}_{i}^{Anchor}\right)$*, i* ∈ {1, *... , N_{AC}*.*N_{AG}*}

This first neural network NNX₁ comprises a decoder DEC-ANC/ALL configured for updating said context-enhanced trajectory polylines with self-attention on said context-enhanced trajectory polylines and with cross-attention limited to (i) polylines $\left({p}_{i}^{MP}, {u}_{i}^{MP}\right)$ of the first *MP* class, (ii) polylines $\left({p}_{i}^{TL}, {u}_{i}^{TL}\right)$ of the second *TL* class and (iii) polylines $\left({p}_{i}^{AG}, {u}_{i}^{AG}\right)$ of the third *AG* class updated by the all-to-all self-attention encoder ENC-ALL.

The updated context-enhanced trajectory polylines $\left({p}_{i}^{AG}, {u}_{i}^{AG}, {u}_{i}^{Anchor}\right)$ output of this first neural network NNX₁ are denoted ${\hat{z 1}}_{i}^{AG}$*.*

The ENC-MP, ENC-TL and ANC-AG encoders build a block diagonal attention matrix that models the interactions within each class of tokens.

Then the inter-class decoders enhance the traffic lights tokens by making them attend to the map tokens, whereas the agent tokens are enhanced by attending to both the traffic lights and map tokens. The intuition behind this is the hierarchical nature of traffic; first there is only the map, then the traffic lights are added and finally the agents join. Intuitively, the map influences the interpretation of traffic lights but not vice versa, whereas map and traffic lights together influence the behavior of agents but not vice versa.

After the inter-class transformer decoders, the all-to-all transformer encoder builds a full attention matrix allowing tokens to attend to each other irrespective of their class. Finally, each agent token is concatenated with *N_{AC}* learnable anchors, which are shared among each type of agent.

The DEC-ANC/ALL anchor-to-all transformer decoder lets each of these anchor tokens attend to all tokens so as to aggregate more contextual information.

The final output ${\hat{z 1}}_{i}^{AG}$ is used to generate the multi-modal future trajectories.

In one embodiment, the number of neighbours is set to K for the ENC-MP, ENC-TL, ENC-AG intra-class encoders and ENC-ALL all-to-all encoder and this number *K* is multiplied by *γ_{TL}, γ_{AG}* and *γ_{AC}* respectively for the DEC-TL/MP, DEC-AG/MP-TL and DEC-ANC/ALL modules such that these decoders can have a larger receptive field.

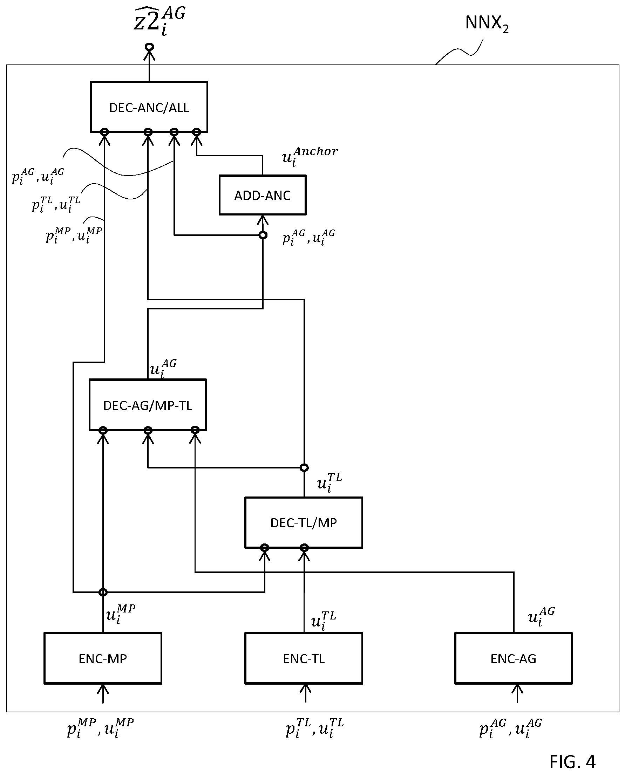

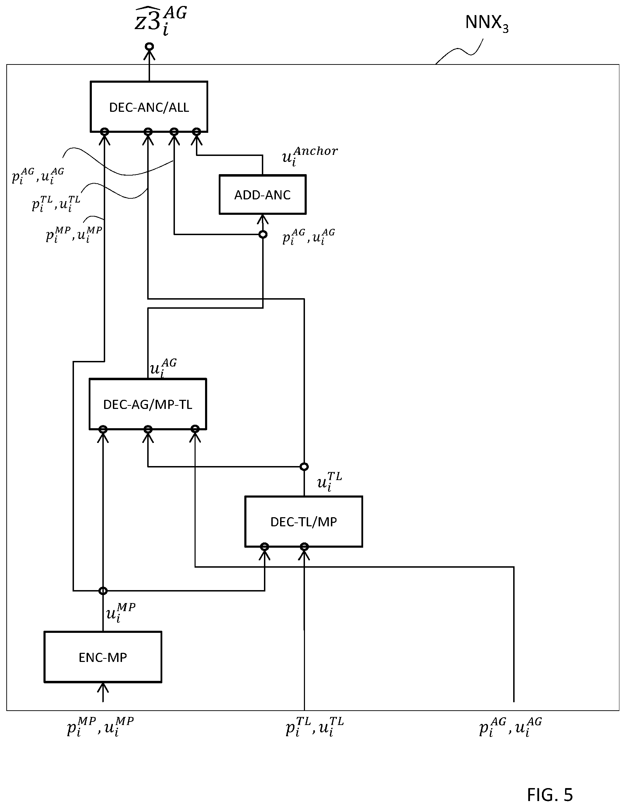

In two embodiments proposed here after with reference to figures 4 and 5, the present disclosure proposes still improved architectures for the neural network transformer.

After encoding the local attributes via the polyline-level encoders, the scenario is described as (pᵢ, uᵢ), i ∈ {1, ..., N} where N = N_{MP} + N_{AG} + N_{TL} is the total number of polylines.

However, this representation cannot be efficiently handled by the first neural network NNX₁ when *N* becomes large, the all-to-all attention becoming prohibitively expensive.

Figure 4 represents a second neural network NNX₂ that can be used in another embodiment of the invention.

The second neural network NNX₂ differs from the first neural network NNX₁ of figure 3 in that it does not comprise the all-to-all self-attention encoder ENC-ALL.

In this second neural network NNX₂, the module ADD-ANC is configured for concatening each polyline $\left({p}_{i}^{AG}, {u}_{i}^{AG}\right)$ of the third class AG updated by the second decoder DEC-AG/TL-MP with *N_{AC}* learnable anchors ${{u}_{a}}^{Anchor}$, *a* ∈ {1, ... *, N_{AC}*} to obtain context-enhanced trajectory polylines ${p}_{c}^{AG} , {u}_{c}^{AG} , {u}_{c}^{Anchor}$, *c* ∈ {1, *... , N_{AC}.N_{AC}*}*.*

In this second neural network NNX₂, the decoder DEC-ANC/ALL is configured for updating these context-enhanced trajectory polylines with self-attention on said context-enhanced trajectory polylines and with cross-attention limited to (i) polylines $\left({p}_{i}^{MP}, {u}_{i}^{MP}\right)$ of the first *MP* class encoded by the first encoder ENC-MP, (ii) polylines $\left({p}_{i}^{TL}, {u}_{i}^{TL}\right)$ of the second *TL* class updated by the first decoder DEC-TL/MP and (iii) polylines $\left({p}_{i}^{AG}, {u}_{i}^{AG}\right)$ of the third *AG* class updated by the second decoder DEC-AG/TL-MP.

The updated context-enhanced trajectory polylines output of this second neural network NNX₂ are denoted ${\hat{z 2}}_{i}^{AG}$.

Figure 5 represents a third neural network NNX₃ that can be used in another embodiment of the invention.

The third neural network NNX₃ differs from the second neural network NNX₂ of figure 4 in that it does not comprise the self-attention encoders ENC-TL and ENC-AG.

The updated context-enhanced trajectory polylines output of this third neural network NNX₃ are denoted ${\hat{z 3}}_{i}^{AG}$*.*

In the third neural network NNX₃ notably, the modules may be organized in a hierarchical way such that some of the intermediate results can be cached and reused during the online inference; for example the outputs of the ENC-MP encoder. This allows tokens from different classes to be updated asynchronously, which significantly reduces the online inference latency.

Besides, the architecture of NNX₃ provides an improved efficiency without sacrificing the performance by trimming the redundant attentions. Some attention matrices shown in Figure 3 are overlapping, which means some relationships are repeatedly modeled, such as the agent-to-agent self-attention.

The third neural network NNX₃ removes the intra-TL, intra-AG and all-to-all transformers, while keeping the ENC-MP, DEC-TL/MP and DEC-AG/MP-TL modules. These three modules together build a lower triangular attention matrix which is necessary and sufficient to model the relationship between map, traffic lights and agent trajectories.

Among others, a fourth neural network transformer could be based on the third neural network NNX3, further comprising the two self-attention encoders ENC-TL and ENC-AG described with reference to Figure 3 and respectively configured for updating the local attributes ${u}_{i}^{TL}$ and ${u}_{i}^{AG}$ of the second class polylines (traffic lights) and of the third class polylines (agent trajectories).

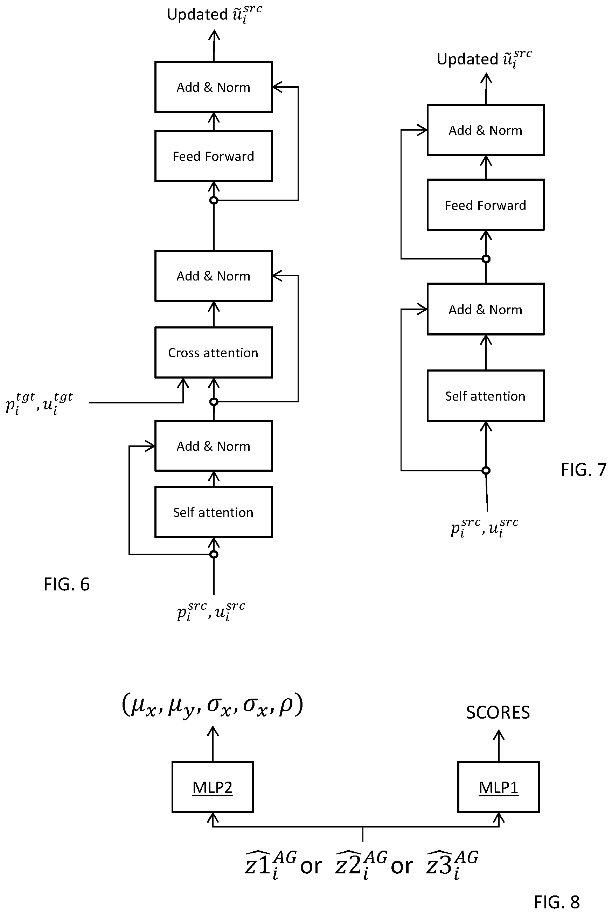

For all the architectures presented above:
- at least one encoder among the first encoder ENC-MP, the second encoder ENC-TL, the third encoder ENC-AG or the ANC-ALL encoder may be a self-attention transformer similar to the self-attention encoder described now with reference to Figure 7 ; and/or
- at least one decoder among the first decoder DEC-TL/MP, the second decoder DEC-AG/TL-MP or the DEC-ANC/ALL decoder may be a cross-attention transformer similar to the one described now with reference to Figure 6.

Figure 6 represents a transformer decoder with self-attention on tokens of a source class *src* and cross-attention from tokens of the source class *src* to tokens of a target class *tgt.*

Figure 7 represents a transformer encoder with self-attention on token of a class *src.* (For self-attention, acronym *"src"* is used for homogeneity only because the source class *src* and the target class *tgt* are in fact the same class).

On figures 6 and 7, a source class *src* and a target class *tgt* may represent a class of polylines among the first class MP, the second class TL and the third class AG.

The transformers of Figures 6 and 7 comprise in particular "Add Norm" (Addition followed by Normalization) and "Feed Forward" data processing layers known by the man skilled in the art of transformers.

The "Add & Norm" layer generally allows the model to retain important information from the previous input while normalizing activations.

More precisely, the "Add" step involves adding the outputs of the previous step (e.g., the outputs of self-attention layer or cross-attention layer) to the input of that layer. This creates a residual connection, allowing the model to learn deviations from the input rather than learning the complete representation directly. This "residual" architecture helps address the vanishing gradient problem when training very deep networks.

The "Norm" step corresponds to layer normalization, such as batch normalization or instance normalization. It normalizes activations to stabilize learning by ensuring that values do not become too large or too small.

The "Feed Forward" step introduces non-linear transformations to learn more complex features. It may be implemented as a two-layer neural network (usually with non-linear activations like ReLU - Rectified Linear Unit between the layers) and is responsible for a non-linear transformation of data and capturing complex relationships in features. The two-layer neural network may be relatively small compared to other deep neural network architectures because the transformer model uses self-attention to capture long-range dependencies.

In summary, in a transformer model with a self-attention mechanism, "Add Norm" allows the model to retain important information from the previous input while normalizing activations, while "Feed Forward" introduces non-linear transformations to learn more complex features.

In one embodiment, the updated value ${{u}^{˜}}_{l}^{X}$ is obtained by an encoding method *Att* which limits the attention to the K-nearest neighbors ( ${k}_{i}^{K}$) of each token, where: $\begin{matrix}{{u}^{˜}}_{i}^{src} = Att \left({u}_{i}^{src},{u}_{j}^{tgt},{r}_{ij}\left|j∈{k}_{i}^{K}\right.\right) \\ = {\sum }_{j ∈ {k}_{i}^{K}} {α}_{ij} \left({u}_{j}^{tgt}{W}^{v}+{b}^{v}+RPE\left({r}_{ij}\right){\hat{W}}^{v}+{\hat{b}}^{v}\right)\end{matrix}$ ${α}_{ij} = \frac{exp \left({e}_{ij}\right)}{{\sum }_{k ∈ {k}_{i}^{K}} exp \left({e}_{ik}\right)} , {e}_{ij} = \frac{\left({u}_{i}^{src}{W}^{q}+{b}^{q}\right) \left({u}_{j}^{tgt}{W}^{k}+{b}^{k}+RPE\left({r}_{ij}\right){\hat{W}}^{k}+{\hat{b}}^{k}\right)}{\sqrt{D}} ,$ where *αᵢⱼ* are the attention weights, *eᵢⱼ* are the logits, *W*^{{*q,k,v*}} *b*^{{*q,k,v*}} are the learnable projection matrices and biases for query, key and value, and *Ŵ*^{{*q,k,v*}}*, b̂*^{{*q,k,v*}} are the learnable projection matrices and biases for RPE.

The future trajectories may be determined from the outputs $z {1}_{i}^{AG} , z {2}_{i}^{AG}$ or $z {3}_{i}^{AG}$ (hereafter ${z}_{i}^{AG}$) of neural network transformer NNX₁, NNX₂, or NNX₃ described above.

For example, outputs ${z}_{i}^{AG}$ may be represented as a mixture of Gaussians and train with a hard assignment strategy, ie assigning for a given scenario each predicted trajectory to a single trajectory as the most likely outcome, without considering the possibility of multiple potential outcomes.

In one embodiment, and as represented on Figure 8, the multi-modal future trajectories for each agent are generated by decoding ${\hat{z}}_{i}^{AG}$*, i* ∈ {1, *..., N_{AG}.N_{AC}*} via two multi-layer perceptrons, a confidence head MLP1 and a trajectory head MLP2.

The confidence head MLP1 predicts the scalar confidence of the whole trajectory. Besides the Gaussian parameters of 2D positions (*µₓ, p_{y}, σₓ, σ_{y}, ρ*) at each future time step, the trajectory head MLP2 predicts also the yaw angles, speeds and 2D velocities.

In one embodiment, the cross entropy loss is used for confidences, negative log-likelihood loss for 2D positions, negative cosine loss for yaw angles and Huber loss for speeds and 2D velocities.

The final training loss may be the unweighted sum of all losses.

Following the hard-assignment strategy, for each agent we optimize only the predicted trajectory that is closest to the ground truth in terms of 2D average displacement error. More details are provided in the supplement.

For example, for each anchor token ${\hat{z}}_{i}^{AG}$*, i* ∈ {1, .*.. , N_{AC}.N_{AC}*}*,* the confidence head MPL1 predicts the logits *pₖ, k* ∈ {1, ... 6}, whereas the trajectory head MPL2 predicts 6 trajectories, each of which is represented as $\left({μ}_{x}^{t}, {μ}_{y}^{t}, {logσ}_{x}^{t}, {logσ}_{y}^{t}, {ρ}^{t}, {v}_{x}^{t}, {v}_{y}^{t}, {θ}^{t}, {s}^{t}\right)$, *t* ∈ {1, *... , T_{f}*}*,* i.e. the mean of the Gaussian in *x, y,* the log standard deviation of the Gaussian in *x, y,* the correlation of the Gaussians, the velocity in *x, y,* the heading angle and the speed.

We denote the ground truth as (*x̂, ŷ,* v̂*ₓ, v̂_{y}, θ̂*, *ŝ*). The negative log-likelihood loss for position is formulated as ${L}_{pos} = - logℵ \left(\hat{x},\hat{y}\left|{μ}_{x}, {μ}_{y}, {σ}_{x}, {σ}_{y}, ρ\right.\right)$

The negative cosine loss for the heading angle is formulated as ${L}_{rot} = - cos \left(\hat{θ}-θ\right)$

The Huber loss for velocities and speed is formulated as ${L}_{vel} = {L}_{δ} \left({\hat{v}}_{x}-{v}_{x}\right) + {L}_{δ} \left({\hat{v}}_{y}-{v}_{y}\right) + {L}_{δ} \left(\hat{s}-s\right)$ where 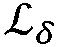 is the Huber loss.

In one embodiment, we use *δ* = 1 for all Huber losses.

In one embodiment, the final regression loss for a trajectory is the unweighted sum *Lₜᵣₐⱼ = Lₚₒₛ + Lᵣₒₜ + Lᵥₑₗ*
which is averaged over the future time steps where the ground truth is available.

In one embodiment, we use a hard assignment strategy, i.e. among the 6 predictions of each agent we select the one that is closest to the ground truth in terms of average displacement error and optimize only for that prediction. Denoting the index of this prediction as *k̂*, the confidence head MLP1 is trained via the cross entropy loss by taking *k̂* as the ground truth ${L}_{conf} = - log \frac{exp \left({p}_{\hat{k}}\right)}{{\sum }_{i = 1}^{6} exp \left({p}_{i}\right)}$

The final training loss for the complete model is the unweighted sum. $L = {L}_{traj} + {L}_{conf}$

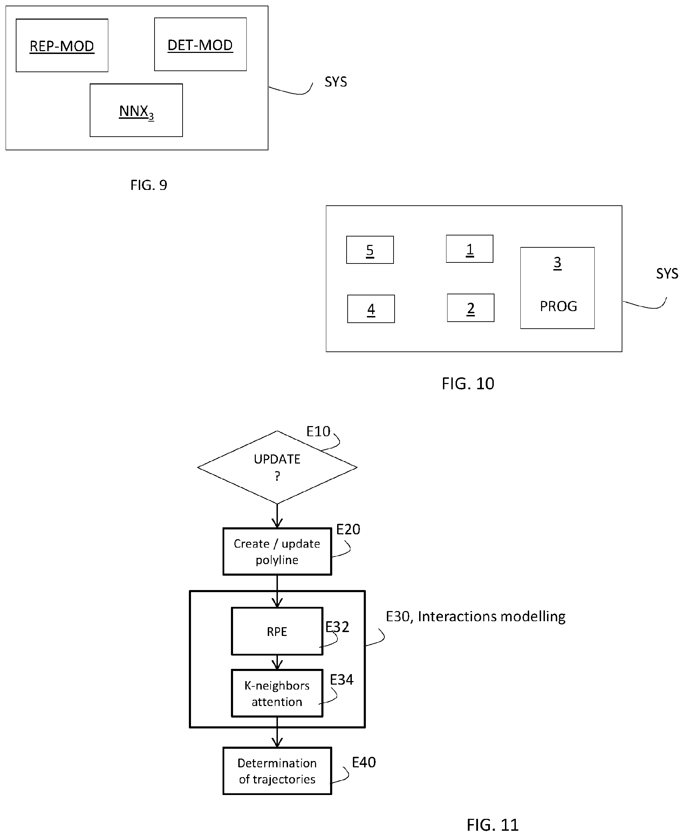

Figure 9 represents a computer-implemented system SYS according to a particular embodiment of the disclosure. This system is configured for predicting a future trajectory of at least one agent in motion in a real scene comprising static elements and traffic lights respectively represented as a first class and as a second class of polylines.

The polylines of the first and second classes are represented by a global pose pᵢ and a local attribute uᵢ.

This system SYS comprises a representation module REP-MOD configured to represent N_{AG} past trajectories of agents in motion in said scene as a third class of polylines, these polylines of the third class being also represented by a global pose pᵢ and a local attribute uᵢ.

In one embodiment, the representation module REP-MOD is also configured to represent the polylines of the first and second classes by a global pose pᵢ and a local attribute uᵢ.

In another embodiment, the representation of the polylines of the first class may be performed by another device.

The system SYS comprises an attention based neural network transformer for modelling interactions between said polylines, said attention based neural network transformer comprising modules configured to update local attributes uᵢ of the polylines of one source class with attention to polylines of at least one target class, said source class and said at least one target class being one of said first, second or third classes of polylines.

In the embodiment of figure 9, this attention based neural network transformer is the attention based neural network transformer NNX3 previously detailed with reference to Figure 5.

The system SYS comprise a determination module DET-MOD for determining a future trajectory of at least one said agent from outputs of the attention based neural network transformer.

In the embodiment of figure 9, the determination module DET-MOD comprises the multi-layer perceptrons MLP1 and MLP2 previously detailed with reference to Figure 8.

Figure 10 illustrates an example of the hardware architecture of system of Figure 9. In this embodiment, the system SYS has the hardware architecture of a computer. As shown in Figure 3, it comprises, in particular, a processor 1, a random access memory 2, a read-only memory 3, a non-volatile memory 4 and communication means 5.

The read-only memory 3 of the system SYS constitutes a recording medium conforming to the invention, which is readable by processor 1 and on which is recorded a computer program PROG conforming to the invention, containing instructions for carrying out the steps of the detection method according to the invention. The program PROG defines functional modules of the system SYS, which are based on or control the aforementioned elements 1 to 5 of the system SYS, and which comprise in particular a representation module REP-MOD, an attention based neural network transformer, and a determination module DET-MOD as previously disclosed.

Figure 11 illustrates the main steps of a detection method.

Generally speaking, the prediction of future trajectories by a vehicle is carried out by executing inferences from the trained transformer, embedded in a vehicle computer.

Very advantageously, the method of the disclosure allows the different classes of polylines to be updated asynchronously during online inference.

The method of Figure 11 comprises a step E10 to determine which of (i) the static elements of the real scene, (ii) elements with the reals scene with a variable state over time (traffic lights) and (iii) agent trajectories are to be updated.

Each time one of said element needs to be created or updated, a polyline representing this element is created or updated (step E20).

According to this disclosure, these elements are represented by heterogeneous polylines with a global pose *pᵢ* and a local attribute *uᵢ*.

Generally, it is not necessary to update first class MP polylines, except when the static conditions of the real environment change, for example in the event of roadworks or, when the direction of traffic changes in a lane.

Generally, for polylines of the second class, only the local attribute representing the current state of the element (for example the color of the traffic light) need to be updated.

The global pose and the local attribute of the third class polylines may be updated frequently, for example in real time.

Then, during a general step E30, interactions between polylines of the three classes are modelled during an attention based neural network transformer as previously disclosed.

This modelling step E30 may comprise a step E32 of determining a pairwise-relative representation of the polylines using their global poses and a step E34 of determining the K-nearest neighbors of each polyline, so that the number of target polylines taken into account for self or cross attention mechanisms is reduced.

Future trajectories are determined during a step E40 from outputs of the attention based neural network transformer. This determination step can be realized by using a trajectory head multi-layer perceptron and a trajectory head multi-layer perceptron.

Comparing the method in the present disclosure with other approaches, particularly in terms of memory usage and inference latency, the following conclusions can be drawn.

In general, agent-centered approaches are criticized for their limited scalability, resulting in a significant increase in memory consumption and inference latency as the number of agents increases.

On the other hand, the scene-centered approaches can be highly efficient, but suffer from reduced precision in their predictions.

The method proposed in the present disclosure positions itself as a compromise between these two approaches and offers a convincing balance between efficiency and performance. In terms of computational efficiency, the method disclosed in this document performs at a level similar to scene-centered approaches while maintaining predictive performance equivalent to agent-centered methods.

The architecture presented in Figure 5 proves to be the optimal compromise between precision and latency.

Besides, the use of static map features during online inference enables the prediction of future positions for a significant number of agents with low latency, without the need for external libraries.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

### References:

[A]: Charles R Qi, Hao Su, Kaichun Mo, and Leonidas J Guibas. Pointnet: Deep learning on point sets for 3d classification and segmentation. In CVPR, 2017.
[B] : Zhejun Zhang, Alexander Liniger, Dengxin Dai, Fisher Yu, and Luc Van Gool. Trafficbots: Towards world models for autonomous driving simulation and motion prediction. In ICRA, 2023.
[C] : Shaoshuai Shi et al., MTR++: Multi-Agent Motion Prediction with Symmetric Scene Modeling and Guided Intention Querying, 30 June 2023.
[D] : Bi-level Future Fusion with Polyline-based Coordinate for Interactive Trajectory Prediction, Yiyao Zhu et al., 19 August 2023

## Claims

1. A computer-implemented method of predicting, for autonomous driving, a future trajectory of at least one agent in motion in a real environment comprising static map elements with no variable state over time and traffic lights respectively represented as a first class *MP* and as a second class *TL* of polylines, said method comprising:
- representing (E20) *N_{AG}* past trajectories of agents in motion in said real environment as a third class *AG* of polylines, polylines *i* of said classes *MP, TL, AG* being represented by a global pose *pᵢ* and a local attribute *uᵢ* ;
wherein said agents in motion include said at least one agent in motion; wherein said agents in motion are vehicles or pedestrians ;
wherein for each said polyline i:
(i) the polyline is an ordered list of consecutive vectors ;
(ii) its global pose *pᵢ* is a position and heading of an object represented by said polyline *i* expressed in a global coordinates system;
(iii) its local attribute *uᵢ* is a local context expressed in a coordinate frame local to its global pose *pᵢ*.
wherein
(a) for each said polyline *i* of the first class *MP*:
(i) the polyline *i* is an ordered series of vectors each representing a segment of a lane of the real environment;
(ii) the global pose ${p}_{i}^{MP}$ of said polyline *i* is a position of a starting point of the first segment of said lane;
(iii) the local attribute ${u}_{i}^{MP}$ of said polyline *i* represents a 2D position and a direction of each segment of said lane and a class of said lane;
(b) for each said polyline i of the second class *TL*:
(i) said polyline *i* represents a traffic light of the real environment;
(ii) the global pose ${p}_{i}^{TL}$ of said polyline *i* is a position of said traffic light in the real environment;
(iii) the local attribute ${u}_{i}^{TL}$ of said polyline *i* represents a state of the traffic light at a current date of observation ;
(c) for each said polyline i of the third class *AG*:
(i) said polyline i represents a past trajectory of an agent;
(ii) the global pose ${p}_{i}^{AG}$ of said polyline *i* is the last observed pose of said agent in the real environment;
(iii) the local attribute ${u}_{i}^{AG}$ of said polyline *i* represents data among past 2D positions, directions, velocities, 1D speed, yaw rate and acceleration of said agent, and a size and a class of said agent;
- modelling (E30) interactions between said polylines of classes *MP, TL* and *AG* using an attention based neural network transformer (NNX₁, NNX₂, NNX₃) comprising modules configured to update local attributes *uᵢ* of the polylines of one source class with attention to polylines of at least one target class, said source class and said at least one target class each one of said first, second or third classes of polylines; and
- determining (E40) a future trajectory of said at least one agent in motion from outputs of said attention based neural network transformer (NNX₁, NNX₂, NNX₃), said determination using at least another neural network taking as input said outputs of said attention based neural network transformer (NNX₁, NNX₂, NNX₃), wherein said modules of said attention based neural network transformer (NNX1, NNX2, NNX3) comprise:
- a first self-attention encoder configured for updating said local attributes ${u}_{i}^{MP}$ of polylines of the first class;
- a first decoder configured for updating said local attributes ${u}_{i}^{TL}$ of polylines of the second class *TL* with self-attention on polylines of the second class *TL* and with cross-attention limited to polylines of the first class *MP* encoded by said first self-attention encoder;
- a second decoder configured for updating said local attributes ${u}_{i}^{AG}$ of polylines of the third class *AG* with self-attention on polylines of the third class *AG* and with cross-attention limited to (i) polylines of the first class *MP* encoded by said first self-attention encoder and (ii) polylines of the second class *TL* updated by said first decoder.

2. The method of claim 1, further comprising:
- concatenating each polyline i of the third class obtained at the output of said second decoder with *N_{AC}* learnable anchors ${{u}_{a}}^{Anchor}$, *a* ∈ {1, ..., *N_{AC}*}*,* to obtain context-enhanced trajectory polylines ${p}_{c}^{AG} , {u}_{c}^{AG} , {u}_{c}^{Anchor}$, *c* ∈ {1, *... , N_{AC}.N_{AG}*};
- said modules of said attention based neural network transformer (NNX1, NNX2, NNX3) further comprising a decoder configured for updating said context-enhanced trajectory polylines with self-attention on said context-enhanced trajectory polylines and with cross-attention limited to (i) polylines of the first class encoded by said first self-attention encoder, (ii) polylines of the second class updated by said first decoder and (iii) polylines of the third class updated by said second decoder.

3. The method of claim 1, wherein said modules of said attention based neural network transformer (NNX1, NNX2, NNX3) further comprise:
- an all-to-all self-attention encoder configured for updating local attributes ${u}_{i}^{MP}$ of polylines of the first class encoded by said first self-attention encoder, local attributes ${u}_{i}^{TL}$ of polylines of the second class *TL* updated by the first decoder and local attributes ${u}_{i}^{AG}$ of polylines of the third class encoded by the second decoder; the method further comprising:
- concatenating each polyline *i* of the third class updated with said all-to-all self-attention encoder with *N_{AC}* learnable anchors ${{u}_{a}}^{Anchor}$, *a* ∈ {1*, ... , N_{AC}*} to obtain a total of *N_{AC}. N_{AG}* context-enhanced trajectory polylines;
- said modules of said attention based neural network transformer (NNX1, NNX2, NNX3) further comprising a decoder configured for updating said context-enhanced trajectory polylines with self-attention on said context-enhanced trajectory polylines and with cross-attention limited to polylines of the first, second and third classes updated by said all-to-all self-attention encoder.

4. The method of any one of claims 1 to 3, wherein at least one of said modules of said attention based neural network transformer (NNX1, NNX2, NNX3) is configured to:
- determine (E32), for each pair *i*, *j* of polylines, i and j being respectively of said source class and of one said target class, and using their global poses *pᵢ, pⱼ*, a relative position *rᵢⱼ* of polyline i with respect to polyline *j;*
- determine (E34), using said relative positions *rᵢⱼ,* for each polyline i of said source class, a set of K-nearest neighbors comprising the K polylines j of said at least one target class closest to polyline i ;
- said update of the local attributes *uᵢ* of the polylines of said source class being performed with attention to only said set of K-nearest neighbors.

5. The method of claim 4, wherein said position *rᵢⱼ* of polyline i relative to polyline j is computed using sinusoidal positional encoding and angular encoding.

6. The method of any of claims 1 to 5, further comprising at least one said agent taking said future trajectory into account.

7. A computer-implemented system (SYS) for predicting, for autonomous driving, a future trajectory of at least one agent in motion in a real environment comprising static map elements with no variable state over time and traffic lights respectively represented as a first class *MP* and as a second class *TL* of polylines, the system comprising:
- a representation module (REP-MOD) configured to represent *N_{AG}* past trajectories of agents in motion in said environment as a third class *AG* of polylines, polylines i of said classes *MP, TL, AG* being represented by a global pose *pᵢ* and a local attribute *uᵢ*;
- an attention based neural network transformer (NNX₁, NNX₂, NNX₃) for modelling interactions between said polylines of classes *MP, TL* and AG, said attention based neural network transformer comprising modules configured to update local attributes *uᵢ* of the polylines of one source class with attention to polylines of at least one target class, said source class and said at least one target class each being one of said first, second or third classes of polylines; and
- a determination module (DET-MOD) for determining a future trajectory of said at least one agent in motion from outputs of said attention based neural network transformer (NNX₁, NNX₂, NNX₃), the determination module using at least another neural network taking as input said outputs of said attention based neural network transformer (NNX₁, NNX₂, NNX₃),
wherein said agents in motion include said at least one agent in motion;
wherein said agents in motion are vehicles or pedestrians; wherein for each said polyline i:
(i) the polyline is an ordered list of consecutive vectors ;
(ii) its global pose *pᵢ* is a position and heading of an object represented by said polyline i expressed in a global coordinates system;
(iii) its local attribute *uᵢ* is a local context expressed in a coordinate frame local to its global pose *pᵢ*.
Wherein
(a) for each said polyline i of the first class *MP*:
(i) the polyline i is an ordered series of vectors each representing a segment of a lane of the real environment;
(ii) the global pose ${p}_{i}^{MP}$ of said polyline *i* is a position of a starting point of the first segment of said lane;
(iii) the local attribute ${u}_{i}^{MP}$ of said polyline *i* represents a 2D position and a direction of each segment of said lane and a class of said lane;
(b) for each said polyline i of the second class *TL*:
(i) said polyline i represents a traffic light of the real environment;
(ii) the global pose ${p}_{i}^{TL}$ of said polyline i is a position of said traffic light in the real environment;
(iii) the local attribute ${u}_{i}^{TL}$ of said polyline i represents a state of the traffic light at a current date of observation ;
(c) for each said polyline i of the third class *AG*:
(i) said polyline i represents a past trajectory of an agent;
(ii) the global pose ${p}_{i}^{AG}$ of said polyline i is the last observed pose of said agent in the real environment;
(iii) the local attribute ${u}_{i}^{AG}$ of said polyline i represents data among past 2D positions, directions, velocities, 1D speed, yaw rate and acceleration of said agent, and a size and a class of said agent,
wherein said modules of said attention based neural network transformer (NNX₁, NNX₂, NNX₃) comprise:
- a first self-attention encoder configured for updating said local attributes ${u}_{i}^{MP}$ of polylines of the first class;
- a first decoder configured for updating said local attributes ${u}_{i}^{TL}$ of polylines of the second class *TL* with self-attention on polylines of the second class *TL* and with cross-attention limited to polylines of the first class *MP* encoded by said first self-attention encoder;
- a second decoder configured for updating said local attributes ${u}_{i}^{AG}$ of polylines of the third class *AG* with self-attention on polylines of the third class *AG* and with cross-attention limited to (i) polylines of the first class *MP* encoded by said first self-attention encoder and (ii) polylines of the second class *TL* updated by said first decoder.

8. A vehicle comprising a computer-implemented system according to Claim 7.

9. A computer program including instructions which, when the computer program is executed by a computer, cause the computer to carry out the steps of the method according to any one of claims 1 to 6.

10. A recording medium readable by a computer and having recorded thereon a computer program including instructions which, when the computer program is executed by the computer, cause the computer to carry out the steps of the method according to any one of claims 1 to 6.

## Patentansprüche

1. Computerimplementiertes Verfahren zum Vorhersagen einer künftigen Trajektorie für ein autonomes Fahren von mindestens einem Agenten in Bewegung in einer realen Umgebung, der statische Kartenelemente ohne einen variablen Zustand über die Zeit sowie Ampeln umfasst, die als eine erste Klasse *MP* bzw. eine zweite Klasse *TL* von Polylinien repräsentiert werden, wobei das Verfahren Folgendes umfasst:
- Repräsentieren (E20) von *N_{AG}* bisherigen Trajektorien von Agenten in Bewegung in der realen Umgebung als eine dritte Klasse *AG* von Polylinien, wobei Polylinien i der Klassen *MP,TL,AG* durch eine globale Lage *pᵢ* und ein lokales Attribut *uᵢ* repräsentiert werden;
wobei die Agenten in Bewegung den mindestens einen Agenten in Bewegung beinhalten;
wobei die Agenten in Bewegung Fahrzeuge oder Fußgänger sind;
wobei für jede Polylinie i:
(i) die Polylinie eine geordnete Liste von aufeinanderfolgenden Vektoren ist;
(ii) ihre globale Lage *pᵢ* eine Position und ein Kurs eines Objekts ist, das durch die Polylinie i in einem globalen Koordinatensystem repräsentiert wird;
(iii) ihr lokales Attribut *uᵢ* ein lokaler Kontext ist, der in einem Koordinatenrahmen lokal zu ihrer globalen Lage *pᵢ* ausgedrückt ist,
wobei
(a) für jede Polylinie i der ersten Klasse *MP:*
(i) die Polylinie i eine geordnete Reihe von Vektoren ist, die jeweils ein Segment einer Spur der realen Umgebung repräsentieren;
(ii) die globale Lage ${p}_{i}^{MP}$ der Polylinie i eine Position eines Startpunktes des ersten Segments der Spur ist;
(iii) das lokale Attribut ${u}_{i}^{MP}$ der Polylinie i eine 2D-Position und eine Richtung jedes Segments der Spur sowie eine Klasse der Spur repräsentiert;
(b) für jede Polylinie i der zweiten Klasse *TL:*
(i) die Polylinie i eine Ampel der realen Umgebung repräsentiert;
(ii) die globale Lage ${p}_{i}^{TL}$ der Polylinie i eine Position der Ampel in der realen Umgebung ist;
(iii) das lokale Attribut ${u}_{i}^{TL}$ der Polylinie *i* einen Zustand der Ampel an einem aktuellen Datum der Beobachtung repräsentiert;
(c) für jede Polylinie *i* der dritten Klasse *AG:*
(i) die Polylinie *i* eine bisherige Trajektorie eines Agenten repräsentiert;
(ii) die globale Lage ${p}_{i}^{AG}$ der Polylinie *i* die zuletzt beobachtete Lage des Agenten in der realen Umgebung ist;
(iii) das lokale Attribut ${u}_{i}^{AG}$ der Polylinie *i* Daten von bisherigen 2D-Positionen, Richtungen, Geschwindigkeiten, einer 1D-Geschwindigkeit, einer Gierrate und einer Beschleunigung des Agenten sowie eine Größe und eine Klasse des Agenten repräsentiert;
- Modellieren (E30) von Interaktionen zwischen den Polylinien der Klassen *MP,TL* und *AG* unter Verwendung eines aufmerksamkeitsbasierten neuronalen Netzwerkumformers (NNX₁, NNX₂, NNX₃), der Module umfasst, die dazu ausgelegt sind, lokale Attribute *uᵢ* der Polylinien einer Quellklasse unter Berücksichtigung von Polylinien von mindestens einer Zielklasse zu aktualisieren, wobei die Quellklasse und die mindestens eine Zielklasse jeweils eine der ersten, der zweiten oder der dritten Klasse von Polylinien sind; und
- Bestimmen (E40) einer künftigen Trajektorie des mindestens einen Agenten in Bewegung anhand von Ausgaben des aufmerksamkeitsbasierten neuronalen Netzwerkumformers (NNX₁, NNX₂, NNX₃), wobei das Bestimmen mindestens ein weiteres neuronales Netzwerk verwendet, das die Ausgaben des aufmerksamkeitsbasierten neuronalen Netzwerkumformers (NNX₁, NNX₂, NNX₃) als Eingabe übernimmt,
wobei die Module des aufmerksamkeitsbasierten neuronalen Netzwerkumformers (NNX₁, NNX₂, NNX₃) Folgendes umfassen:
- einen ersten Self-Attention-Codierer, der zum Aktualisieren der lokalen Attribute ${u}_{i}^{MP}$ von Polylinien der ersten Klasse ausgelegt ist;
- einen ersten Decodierer, der zum Aktualisieren der lokalen Attribute ${u}_{i}^{TL}$ von Polylinien der zweiten Klasse *TL* mit Self-Attention für Polylinien der zweiten Klasse (*TL*) und mit Cross-Attention ausgelegt ist, die auf Polylinien der ersten Klasse *MP* begrenzt ist, die vom ersten Self-Attention-Codierer codiert werden;
- einen zweiten Decodierer, der zum Aktualisieren der lokalen Attribute ${u}_{i}^{AG}$ von Polylinien der dritten Klasse *AG* mit Self-Attention für **Polylinien** der dritten Klasse *AG* und mit Cross-Attention ausgelegt ist, die auf (i) Polylinien der ersten Klasse *MP,* die vom ersten Self-Attention-Codierer codiert werden, und (ii) Polylinien der zweiten Klasse *TL,* die vom ersten Decodierer aktualisiert werden, begrenzt ist.

2. Verfahren nach Anspruch 1, das ferner Folgendes umfasst:
- Verketten von jeder Polylinie *i* der dritten Klasse, die an der Ausgabe des zweiten Decodierers mit *N_{AC}* erlernbaren Ankern ${u}_{a}^{Anchor}$*, a* ∈ {1, ...,*N_{AC}*} erhalten wird, um kontextoptimierte Trajektorienpolylinien ${p}_{c}^{AG} , {u}_{c}^{AG} , {u}_{c}^{Anchor}$*, c* ∈ {1, *..., N_{AC}. N_{AG}*} erhalten;
- wobei die Module des aufmerksamkeitsbasierten neuronalen Netzwerkumformers (NNX₁, NNX₂, NNX₃) ferner einen Decodierer umfassen, der zum Aktualisieren der kontextoptimierten Trajektorienpolylinien mit Self-Attention für die kontextoptimierten Trajektorienpolylinien und mit Cross-Attention ausgelegt ist, die auf (i) Polylinien der ersten Klasse, die vom ersten Self-Attention-Codierer codiert werden, (ii) Polylinien der zweiten Klasse, die vom ersten Decodierer aktualisiert werden, und (iii) Polylinien der dritten Klasse, die vom zweiten Decodierer aktualisiert werden, begrenzt ist.

3. Verfahren nach Anspruch 1, wobei die Module des aufmerksamkeitsbasierten neuronalen Netzwerkumformers (NNX₁, NNX₂, NNX₃) ferner Folgendes umfassen:
- einen All-to-All-Self-Attention-Codierer, der zum Aktualisieren von lokalen Attributen ${u}_{i}^{MP}$ von Polylinien der ersten Klasse, die vom ersten Self-Attention-Codierer codiert werden, lokalen Attributen ${u}_{i}^{TL}$ von Polylinien der zweiten Klasse, die vom ersten Decodierer aktualisiert werden, und lokalen Attributen ${u}_{i}^{AG}$ von Polylinien der dritten Klasse, die vom zweiten Decodierer codiert werden, ausgelegt ist;
wobei das Verfahren ferner Folgendes umfasst:
- Verketten von jeder Polylinie i der dritten Klasse, die mit dem All-to-All-Self-Attention-Codierer aktualisiert wird, mit *N_{AC}* erlernbaren Ankern ${u}_{a}^{Anchor}$*, a* ∈ *{1, ..., N_{AC}*}*,* um insgesamt *N_{AC}.N_{AG}* kontextoptimierte Trajektorienpolylinien zu erhalten;
- wobei die Module des aufmerksamkeitsbasierten neuronalen Netzwerkumformers (NNX₁, NNX₂, NNX₃) ferner einen Decodierer umfassen, der zum Aktualisieren der kontextoptimierten Trajektorienpolylinien mit Self-Attention für die kontextoptimierten Trajektorienpolylinien und mit Cross-Attention ausgelegt ist, die auf Polylinien der ersten, der zweiten und der dritten Klasse begrenzt ist, die vom All-to-All-Self-Attention-Codierer aktualisiert werden,

4. Verfahren nach einem der Ansprüche 1 bis 3, wobei mindestens eines der Module des aufmerksamkeitsbasierten neuronalen Netzwerkumformers (NNX₁, NNX₂, NNX₃) zu Folgendem ausgelegt ist:
- Bestimmen (E32) für jedes Paar i,j von Polylinien, wobei i und j zur Quellklasse bzw. zu der einen Zielklasse gehören, und unter Verwendung von deren globalen Lagen *pᵢ, pⱼ,* einer relativen Position *rᵢⱼ* der Polylinie i mit Bezug auf die Polylinie j,
- Bestimmen (E34) unter Verwendung der relativen Positionen *rᵢⱼ* für jede Polylinie i der Quellklasse von K-nächsten Nachbarn, die die K Polylinien j der mindestens einen Zielklasse, die der Polylinie i am nächsten ist, umfassen;
- wobei die Aktualisierung der lokalen Attribute *uᵢ* der Polylinien der Quellklasse mit Berücksichtigung nur des Satzes von K-nächsten Nachbarn durchgeführt wird.

5. Verfahren nach Anspruch 4, wobei die Position *rᵢⱼ* von Polylinie i relativ zu Polylinie j unter Verwendung einer sinusförmigen Positionscodierung und Winkelcodierung berechnet wird.

6. Verfahren nach einem der Ansprüche 1 bis 5, das ferner umfasst, dass mindestens einer der AgentenT die künftige Trajektorie berücksichtigt.

7. Computerimplementiertes System (SYS) zum Vorhersagen einer künftigen Trajektorie für ein autonomes Fahren von mindestens einem Agenten in Bewegung in einer realen Umgebung, der statische Kartenelemente ohne einen variablen Zustand über die Zeit sowie Ampeln umfasst, die als eine erste Klasse *MP* bzw. eine zweite Klasse *TL* von Polylinien repräsentiert werden, wobei das System Folgendes umfasst:
- ein Repräsentationsmodul (REP-MOD), das dazu ausgelegt ist, *N_{AG}* bisherige Trajektorien von Agenten in Bewegung in der Umgebung als Polylinien einer dritten Klasse *AG* zu repräsentieren, wobei die Polylinien i der Klassen *MP,TL,AG* von einer globalen Lage *pᵢ* und einem lokalen Attribut *uᵢ* repräsentiert werden;
- einen aufmerksamkeitsbasierten neuronalen Netzwerkumformer (NNX₁, NNX₂, NNX₃) zum Modellieren von Interaktionen zwischen den Polylinien der Klasse *MP, TL* und *AG ,* wobei der aufmerksamkeitsbasierte neuronale Netzwerkumformer Module umfasst, die dazu ausgelegt sind, lokale Attribute *uᵢ* der Polylinien einer Quellklasse unter Berücksichtigung von Polylinien von mindestens einer Zielklasse zu aktualisieren, wobei die Quellklasse und die mindestens eine Zielklasse jeweils eine der ersten, der zweiten oder der dritten Klasse von Polylinien sind; und
- ein Bestimmungsmodul (DET-MOD) zum Bestimmen einer künftigen Trajektorie des mindestens einen Agenten in Bewegung anhand von Ausgaben des aufmerksamkeitsbasierten neuronalen Netzwerkumformers (NNX₁, NNX₂, NNX₃), wobei das Bestimmungsmodul mindestens ein weiteres neuronales Netzwerk verwendet, das die Ausgaben des aufmerksamkeitsbasierten neuronalen Netzwerkumformers (NNX₁, NNX₂, NNX₃) als Eingabe übernimmt,
wobei die Agenten in Bewegung den mindestens einen Agenten in Bewegung beinhalten;
wobei die Agenten in Bewegung Fahrzeuge oder Fußgänger sind;
wobei für jede Polylinie i:
(i) die Polylinie eine geordnete Liste von aufeinanderfolgenden Vektoren ist;
(ii) ihre globale Lage *pᵢ* eine Position und ein Kurs eines Objekts ist, das durch die Polylinie *i* in einem globalen Koordinatensystem repräsentiert wird;
(iii) ihr lokales Attribut *uᵢ* ein lokaler Kontext ist, der in einem Koordinatenrahmen lokal zu ihrer globalen Lage *pᵢ* ausgedrückt ist.
Wobei
(a) für jede Polylinie *i* der ersten Klasse *MP:*
(i) die Polylinie *i* eine geordnete Reihe von Vektoren ist, die jeweils ein Segment einer Spur der realen Umgebung repräsentieren;
(ii) die globale Lage ${p}_{i}^{MP}$ der Polylinie i eine Position eines Startpunktes des ersten Segments der Spur ist;
(iii) das lokale Attribut ${u}_{i}^{MP}$ der Polylinie *i* eine 2D-Position und eine Richtung jedes Segments der Spur sowie eine Klasse der Spur repräsentiert;
(b) für jede Polylinie *i* der zweiten Klasse *TL:*
(i) die Polylinie *i* eine Ampel der realen Umgebung repräsentiert;
(ii) die globale Lage ${p}_{i}^{TL}$ der Polylinie *i* eine Position der Ampel in der realen Umgebung ist;
(iii) das lokale Attribut ${u}_{i}^{TL}$ der Polylinie *i* einen Zustand der Ampel an einem aktuellen Datum der Beobachtung repräsentiert;
(c) für jede Polylinie i der dritten Klasse *AG:*
(i) die Polylinie i eine bisherige Trajektorie eines Agenten repräsentiert;
(ii) die globale Lage ${p}_{i}^{AG}$ der Polylinie i die zuletzt beobachtete Lage des Agenten in der realen Umgebung ist;
(iii) das lokale Attribut ${u}_{i}^{AG}$ der Polylinie i Daten von bisherigen 2D-Positionen, Richtungen, Geschwindigkeiten, einer 1D-Geschwindigkeit, einer Gierrate und einer Beschleunigung des Agenten sowie eine Größe und eine Klasse des Agenten repräsentiert,
wobei die Module des aufmerksamkeitsbasierten neuronalen Netzwerkumformers (NNX₁, NNX₂, NNX₃) Folgendes umfassen:
- einen ersten Self-Attention-Codierer, der zum Aktualisieren der lokalen Attribute ${u}_{i}^{MP}$ von Polylinien der ersten Klasse ausgelegt ist;
- einen ersten Decodierer, der zum Aktualisieren der lokalen Attribute ${u}_{i}^{TL}$ von Polylinien der zweiten Klasse *TL* mit Self-Attention für Polylinien der zweiten Klasse *TL* und mit Cross-Attention ausgelegt ist, die auf Polylinien der ersten Klasse *MP* begrenzt ist, die vom ersten Self-Attention-Codierer codiert werden;
- einen zweiten Decodierer, der zum Aktualisieren der lokalen Attribute ${u}_{i}^{AG}$ von Polylinien der dritten Klasse *AG* mit Self-Attention für Polylinien der dritten Klasse *AG* und mit Cross-Attention ausgelegt ist, die auf (i) Polylinien der ersten Klasse *MP,* die vom ersten Self-Attention-Codierer codiert werden, und (ii) Polylinien der zweiten Klasse *TL* begrenzt ist, die vom ersten Codierer aktualisiert werden.

8. Fahrzeug, das ein computerimplementiertes System nach Anspruch 7 umfasst.

9. Computerprogramm, das Anweisungen beinhaltet, die, wenn das Computerprogramm von einem Computer ausgeführt wird, den Computer veranlassen, die Schritte des Verfahrens nach einem der Ansprüche 1 bis 6 durchzuführen.

10. Aufzeichnungsmedium, das von einem Computer lesbar ist und auf dem ein Computerprogramm aufgezeichnet ist, das Anweisungen beinhaltet, die, wenn das Computerprogramm vom Computer ausgeführt wird, den Computer veranlassen, die Schritte des Verfahrens nach einem der Ansprüche 1 bis 6 durchzuführen.

## Revendications

1. Procédé mis en œuvre par ordinateur destiné à prédire dans le cadre d'une conduite autonome une trajectoire future d'au moins un agent en mouvement dans un environnement réel comprenant des éléments cartographiques statiques en l'absence d'état variable au fil du temps et des feux de circulation représentés respectivement sous la forme d'une première classe *MP* et d'une deuxième classe *TL* de polylignes, ledit procédé comprenant les étapes suivantes :
- représenter (E20) *N_{AG}* trajectoires passées d'agents en mouvement dans ledit environnement réel sous la forme d'une troisième classe *AG* de polylignes, les polylignes *i* desdites classes *MP, TL, AG* étant représentées par une pose globale *pᵢ* et un attribut local *uᵢ ;*
dans lequel lesdits agents en mouvement comportent ledit au moins un agent en mouvement ; dans lequel lesdits agents en mouvement sont des véhicules ou des piétons ;
dans lequel pour chacune desdites polylignes i :
(i) la polyligne est une liste ordonnée de vecteurs consécutifs ;
(ii) sa pose globale *pᵢ* est une position et un cap d'un objet représenté par ladite polyligne i exprimés dans un système de coordonnées global ;
(iii) son attribut local *uᵢ* est un contexte local exprimé dans un cadre de coordonnées local par rapport à sa pose globale *pᵢ,*
dans lequel
(a) pour chacune desdites polylignes *i* de la première classe *MP* :
(i) la polyligne i est une série ordonnée de vecteurs représentant chacun un segment d'une voie de l'environnement réel ;
(ii) la pose globale ${p}_{i}^{MP}$ de ladite polyligne *i* est une position d'un point de départ du premier segment de ladite voie ;
(iii) l'attribut local ${u}_{i}^{MP}$ de ladite polyligne *i* représente une position 2D et une direction de chaque segment de ladite voie et une classe de ladite voie ;
(b) pour chacune desdites polylignes *i* de la deuxième classe *TL* :
(i) ladite polyligne i représente un feu de circulation de l'environnement réel ;
(ii) la pose globale ${p}_{i}^{TL}$ de ladite polyligne *i* est une position dudit feu de circulation dans l'environnement réel ;
(iii) l'attribut local ${u}_{i}^{TL}$ de ladite polyligne *i* représente un état du feu de circulation à une date d'observation actuelle ;
(c) pour chacune desdites polylignes i de la troisième classe *AG* :
(i) ladite polyligne i représente une trajectoire passée d'un agent ;
(ii) la pose globale ${p}_{i}^{AG}$ de ladite polyligne *i* est la dernière pose observée dudit agent dans l'environnement réel ;
(iii) l'attribut local ${u}_{i}^{AG}$ de ladite polyligne *i* représente des données parmi des positions 2D passées, des directions, des vélocités, une vitesse 1D, un taux de lacet et une accélération dudit agent, ainsi qu'une taille et une classe dudit agent :
- modéliser (E30) des interactions entre lesdites classes *MP, TL, AG* de polylignes en utilisant un transformateur de réseau neuronal basé sur l'attention (NNX₁, NNX₂, NNX₃) comprenant des modules configurés pour mettre à jour des attributs locaux *uᵢ* des polylignes d'une classe source en portant une attention aux polylignes d'au moins une classe cible, ladite classe source et ladite au moins une classe cible ayant chacune ladite première classe de polylignes, ladite deuxième classe de polylignes ou ladite troisième classe de polylignes ; et
- déterminer (E40) une trajectoire future dudit au moins un agent en mouvement à partir des sorties dudit transformateur de réseau neuronal basé sur l'attention (NNX₁, NNX₂, NNX₃), ladite détermination utilisant au moins un autre réseau neuronal prenant comme entrée lesdites sorties dudit transformateur de réseau neuronal basé sur l'attention (NNX₁, NNX₂, NNX₃),
dans lequel lesdits modules dudit transformateur de réseau neuronal basé sur l'attention (NNX₁, NNX₂, NNX₃) comprennent :
- un premier codeur d'auto-attention configuré pour mettre à jour lesdits attributs locaux ${u}_{i}^{MP}$ de polylignes de la première classe ;
- un premier décodeur configuré pour mettre à jour lesdits attributs locaux ${u}_{i}^{TL}$ de polylignes de la deuxième classe *TL* en portant une auto-attention sur les polylignes de la deuxième classe *TL* et une attention croisée limitée aux polylignes de la première classe *MP* codées par ledit premier codeur d'auto-attention ;
- un deuxième décodeur configuré pour mettre à jour lesdits attributs locaux ${u}_{i}^{AG}$ de polylignes de la troisième classe *AG* en portant une auto-attention sur les polylignes de la troisième classe *AG* et une attention croisée limitée (i) aux polylignes de la première classe *MP* codées par ledit premier codeur d'auto-attention et (ii) aux polylignes de la deuxième classe *TL* mises à jour par ledit premier décodeur.

2. Procédé selon la revendication 1, comprenant en outre les étapes suivantes :
- concaténer chaque polyligne i de la troisième classe obtenue en sortie dudit deuxième décodeur avec *N_{AC}* ancres apprenables ${u}_{a}^{Anchor} a , ∈ \left\{1,… .{N}_{AC}\right\}$ afin d'obtenir des polylignes de trajectoire améliorées par le contexte ${p}_{c}^{AG} , {u}_{c}^{AG} , {u}_{c}^{Anchor}$*, c* ∈ {1*, ...N_{AC}.N_{AG}*} ;
- lesdits modules dudit transformateur de réseau neuronal basé sur l'attention (NNX₁, NNX₂, NNX₃) comprenant en outre un décodeur configuré pour mettre à jour lesdites polylignes de trajectoire améliorées par le contexte en portant une auto-attention sur lesdites polylignes de trajectoire améliorées par le contexte et une attention croisée limitée (i) aux polylignes de la première classe codées par ledit premier codeur d'auto-attention, (ii) aux polylignes de la deuxième classe mises à jour par ledit premier décodeur et (iii) aux polylignes de la troisième classe mises à jour par ledit deuxième décodeur.

3. Procédé selon la revendication 1, dans lequel lesdits modules dudit transformateur de réseau neuronal basé sur l'attention (NNX₁, NNX₂, NNX₃) comprennent en outre :
- un codeur d'auto-attention « tout vers tout » configuré pour mettre à jour des attributs locaux ${u}_{i}^{MP}$ de polylignes de la première classe codées par ledit premier codeur d'auto-attention, des attributs locaux ${u}_{i}^{TL}$ de polylignes de la deuxième classe TL mises à jour par le premier décodeur et des attributs locaux ${u}_{i}^{AG}$ de polylignes de la troisième classe codées par le deuxième décodeur ;
le procédé comprenant en outre les étapes suivantes :
- concaténer chaque polyligne i de la troisième classe mise à jour par ledit codeur d'auto-attention « tout vers tout » avec *N_{AC}* ancres apprenables ${u}_{a}^{Anchor} a , ∈ \left\{1,… .{N}_{AC}\right\}$ afin d'obtenir un total de *N_{AC}. N_{AG}* polylignes de trajectoire améliorées par le contexte ;
- lesdits modules dudit transformateur de réseau neuronal basé sur l'attention (NNX₁, NNX₂, NNX₃) comprenant en outre un décodeur configuré pour mettre à jour lesdites polylignes de trajectoire améliorées par le contexte en portant une auto-attention sur lesdites polylignes de trajectoire améliorées par le contexte et une attention croisée limitée aux polylignes des première, deuxième et troisième classes mises à jour par ledit codeur d'auto-attention « tout vers tout ».

4. Procédé selon l'une quelconque des revendications 1 à 3, dans lequel au moins un desdits modules dudit transformateur de réseau neuronal basé sur l'attention (NNX₁, NNX₂, NNX₃) est configuré pour :
- pour chaque paire de polylignes *i, j, i* et *j* ayant respectivement ladite classe source et une classe cible, et en utilisant leurs poses globales *pᵢ, pⱼ,* déterminer (E32) une position relative *rᵢⱼ* de la polyligne *i* par rapport à la polyligne *j ;*
- déterminer (E34), lesdites positions relatives *rᵢⱼ* pour chaque polyligne *i* de ladite classe source, déterminer (E34) un ensemble des K voisins les plus proches comprenant les K polylignes j de ladite au moins une classe cible les plus proches de la polyligne *i* :
- ladite mise à jour des attributs locaux *uᵢ* des polylignes de ladite classe source étant effectuée en portant une attention uniquement audit ensemble des K voisins les plus proches.

5. Procédé selon la revendication 4, dans lequel ladite position *rᵢⱼ* de la polyligne *i* par rapport à la polyligne *j* est calculée en utilisant un codage de position sinusoïdal et un codage angulaire.

6. Procédé selon l'une quelconque des revendications 1 à 5, comprenant en outre un desdits agents prenant en compte ladite trajectoire future.

7. Système mis en œuvre par ordinateur (SYS) destiné à prédire dans le cadre d'une conduite autonome une trajectoire future d'au moins un agent en mouvement dans un environnement réel comprenant des éléments cartographiques statiques en l'absence d'état variable au fil du temps et des feux de circulation représentés respectivement sous la forme d'une première classe *MP* et d'une deuxième classe *TL* de polylignes, le système comprenant :
- un module de représentation (REP-MOD) configuré pour représenter *N_{AG}* trajectoires passées d'agents en mouvement dans ledit environnement sous la forme d'une troisième classe *AG* de polylignes, les polylignes *i* desdites classes *MP, TL, AG* étant représentées par une pose globale *pᵢ* et un attribut local *uᵢ ;*
- un transformateur de réseau neuronal basé sur l'attention (NNX₁, NNX₂, NNX₃) pour modéliser les interactions entre lesdits polylignes des classes *MP, TL, AG,* ledit transformateur de réseau neuronal basé sur l'attention comprenant des modules configurés pour mettre à jour des attributs locaux *uᵢ* des polylignes d'une classe source en portant une attention aux polylignes d'au moins une classe cible, ladite classe source et ladite au moins une classe cible ayant chacune ladite première classe de polylignes, ladite deuxième classe de polylignes ou ladite troisième classe de polylignes ; et
- un module de détermination (DET-MOD) pour déterminer une trajectoire future dudit au moins un agent en mouvement à partir des sorties dudit transformateur de réseau neuronal basé sur l'attention (NNX₁, NNX₂, NNX₃), le module de détermination utilisant au moins un autre réseau neuronal prenant comme entrée lesdites sorties dudit transformateur de réseau neuronal basé sur l'attention (NNX₁, NNX₂, NNX₃),
dans lequel lesdits agents en mouvement comportent ledit au moins un agent en mouvement ; dans lequel lesdits agents en mouvement sont des véhicules ou des piétons ;
dans lequel pour chacune desdites polylignes i :
(i) la polyligne est une liste ordonnée de vecteurs consécutifs ;
(ii) sa pose globale *pᵢ* est une position et un cap d'un objet représenté par ladite polyligne i exprimés dans un système de coordonnées global ;
(iii) son attribut local *uᵢ* est un contexte local exprimé dans un cadre de coordonnées local par rapport à sa pose globale *pᵢ,*
dans lequel
(a) pour chacune desdites polylignes *i* de la première classe *MP* :
(i) la polyligne i est une série ordonnée de vecteurs représentant chacun un segment d'une voie de l'environnement réel ;
(ii) la pose globale ${p}_{i}^{MP}$ de ladite polyligne *i* est une position d'un point de départ du premier segment de ladite voie ;
(iii) l'attribut local ${u}_{i}^{MP}$ de ladite polyligne *i* représente une position 2D et une direction de chaque segment de ladite voie et une classe de ladite voie ;
(b) pour chacune desdites polylignes *i* de la deuxième classe *TL* :
(i) ladite polyligne i représente un feu de circulation de l'environnement réel ;
(ii) la pose globale ${p}_{i}^{TL}$ de ladite polyligne *i* est une position dudit feu de circulation dans l'environnement réel ;
(iii) l'attribut local ${u}_{i}^{TL}$ de ladite polyligne *i* représente un état du feu de circulation à une date d'observation actuelle ;
(c) pour chacune desdites polylignes i de la troisième classe *AG* :
(i) ladite polyligne i représente une trajectoire passée d'un agent ;
(ii) la pose globale ${p}_{i}^{AG}$ de ladite polyligne *i* est la dernière pose observée dudit agent dans l'environnement réel ;
(iii) l'attribut local ${u}_{i}^{AG}$ de ladite polyligne *i* représente des données parmi des positions 2D passées, des directions, des vélocités, une vitesse 1D, un taux de lacet et une accélération dudit agent, ainsi qu'une taille et une classe dudit agent,
dans lequel lesdits modules dudit transformateur de réseau neuronal basé sur l'attention (NNX₁, NNX₂, NNX₃) comprennent :
- un premier codeur d'auto-attention configuré pour mettre à jour lesdits attributs locaux ${u}_{i}^{MP}$ de polylignes de la première classe ;
- un premier décodeur configuré pour mettre à jour lesdits attributs locaux ${u}_{i}^{TL}$ de polylignes de la deuxième classe *TL* en portant une auto-attention sur les polylignes de la deuxième classe *TL* et une attention croisée limitée aux polylignes de la première classe *MP* codées par ledit premier codeur d'auto-attention ;
- un deuxième décodeur configuré pour mettre à jour lesdits attributs locaux ${u}_{i}^{AG}$ de polylignes de la troisième classe *AG* en portant une auto-attention sur les polylignes de la troisième classe *AG* et une attention croisée limitée (i) aux polylignes de la première classe *MP* codées par ledit premier codeur d'auto-attention et (ii) aux polylignes de la deuxième classe *TL* mises à jour par ledit premier décodeur.

8. Véhicule comprenant un système mis en œuvre par ordinateur selon la revendication 7.

9. Programme informatique comportant des instructions qui, lorsque le programme informatique est exécuté par un ordinateur, amènent l'ordinateur à mettre en œuvre les étapes du procédé selon l'une quelconque des revendications 1 à 6.

10. Support d'enregistrement lisible par un ordinateur sur lequel est enregistré un programme informatique comportant des instructions qui, lorsque le programme informatique est exécuté par l'ordinateur, amènent l'ordinateur à mettre en œuvre les étapes du procédé selon l'une quelconque des revendications 1 à 6.
